Europäisches Patentamt

European Patent Office

Office européen des brevets

(19)

(11) **EP 0 869 604 A2**

(12) **EUROPÄISCHE PATENTANMELDUNG**

(43) Veröffentlichungstag:
07.10.1998 Patentblatt 1998/41

(51) Int. Cl.$^6$: **H02M 7/5387**

(21) Anmeldenummer: 98105174.1

(22) Anmeldetag: 23.03.1998

(84) Benannte Vertragsstaaten:
**AT BE CH DE DK ES FI FR GB GR IE IT LI LU MC NL PT**
Benannte Erstreckungsstaaten:
**AL LT LV MK RO SI**

(30) Priorität: **03.04.1997 DE 19713831**

(71) Anmelder:
**SIEMENS AKTIENGESELLSCHAFT**
**80333 München (DE)**

(72) Erfinder:
**Göpfrich, Kurt, Dipl.-Ing.**
**91058 Erlangen (DE)**

(54) **Verfahren und Schaltungsanordnung zur Regelung der Taktfrequenz bei Umrichtern mit Hysteresestromregler**

(57) Um die mittlere Taktfrequenz (f) eines Umrichters (UM) in einem optimalen Bereich zu halten, wird unter der Annahme, daß die mittlere Taktfrequenz in allen drei Netzphasen (U,V, W) gleich ist, die Anzahl der Ansteuerimpulse (IMPv) pro Periodendauer einer Netzperiode erfaßt und bei Überschreitung des optimalen Taktfrequenzwertes (A) die Hysterese von unterlagerten Hysteresestromreglern (HRu,HRv,HRw) über einen Integrator (I) so erhöht, daß eine Verringerung der Taktfrequenz erfolgt.

EP 0 869 604 A2

## Beschreibung

Die Erfindung betrifft ein Verfahren sowie eine Schaltungsanordnung zur Regelung der Taktfrequenz bei Umrichtern mit Hysteresestromregler.

Es ist bekannt, daß die Stromrichterventile eines an ein dreiphasiges Drehstromnetz angeschlossenen Umrichters mit Ansteuersignalen angesteuert werden, die unter Verwendung von unterlagerten Stromreglern auf die Phasenlage des Spannungssystemes des Netzes synchronisiert sind.

Ein solches Verfahren zur Erzeugung von Ansteuersignalen, welche auf die Phasenlage des Spannungssystemes des Netzes synchronisiert sind, ist aus der DE-OS-37 38 181 bekannt. Darin ist ein Umrichter beschrieben, der mittels eines Phasenreglers ein zu einer verketteten Spannung synchronisiertes analoges Winkelsignal bildet, um Funktionsspeicher zur Bildung von digitalen Winkelfunktionswerten zu adressieren. Ein Gleichspannungsregler liefert den Sollwert für die Amplitude des dem Wechselspannungsnetz zu entnehmenden Systemes der Wechselströme. Durch Multiplikation der digitalen Winkelfunktionswerte mit der Sollamplitude liefern Digital/Analog-Umsetzer ein System von Phasenstrom-Sollwerten, das mit entsprechenden Stromistwerten verglichen wird. Die Vergleichsergebnisse dienen zur Ansteuerung von unterlagerten Stromreglern, deren Ausgangssignale Ansteuersignale für die Ventile des Umrichters (z.B. Transistoren) liefern.

Zum einen können die genannten Stromregler als Pulsweitenmodulation-Stromregler PWM ausgelegt sein. Bei solchen Pulsweitenmodulations-Reglern wird eine konstante Frequenz vorgegeben. Die Stromwelligkeit ist innerhalb einer Periode der Netzphase nicht konstant. Sie nimmt im Bereich der Nulldurchgänge zu. Im Frequenzbereich zeigt sich in diesem Fall, daß die Taktfrequenz und deren Vielfache deutlich hervortreten, was unerwünscht ist.

Mit wesentlich geringerem Aufwand lassen sich die unterlagerten Stromregler als Hysteresestromregler realisieren. Dabei wird ein Toleranzband - die Hysterese - als endlicher Wert fest vorgegeben. Variabel ist in diesem Fall die Frequenz. Sie nimmt im Bereich der Spannungsnulldurchgänge zu.

Bei der Ausführung des Stromreglers als Hystereseregler ist dabei die sich einstellende Taktfrequenz abhängig von mehreren Parametern. Dies sind u.a.:

1. Die eingestellte Hysterese des Stromreglers,
2. die Induktivität einer Kommutierungsdrossel,
3. die Amplitude der Netzspannung/Amplitude der Zwischenkreisspannung,
4. die Phasenlage der Netzspannung (maximale Taktfrequenz im Nulldurchgang der entsprechenden Phasenspannung).

Mit diesen Parametern ändern sich neben der Taktfrequenz auch die Schaltverluste im Leistungsteil. Beim Bestimmen einer festen Hysterese muß also vom ungünstigsten Fall ausgegangen werden. Damit verschenkt man jedoch Freiheitsgrade bei der Optimierung.

Wichtig im Hinblick auf eine solche Optimierung ist eine Betrachtung der mittleren Taktfrequenz, welche im folgenden als die Anzahl der Schaltvorgänge der Stromrichterventile pro Periodendauer einer Netzperiode definiert sein soll. Diese mittlere Taktfrequenz beeinflußt zum einen die Schaltverluste im Leistungsteil des Umrichters, die Stromwelligkeit sowie die Dimmensionierung der Bauelemente. Je höher die mittlere Taktfrequenz ist, um so kleinere und auch kostengünstigere Bauelemente können eingesetzt werden. Außerdem sinkt die Stromwelligkeit mit zunehmender Taktfrequenz. Umgekehrt hat jedoch hat eine hohe mittlere Taktfrequenz hohe Schaltverluste im Leistungsteil zur Folge, da solche Schaltverluste direkt proportional zur mittleren Taktfrequenz sind.

Aufgabe der vorliegenden Erfindung ist es daher, einen Umrichter mit Hysteresestromregler so zu regeln, daß die mittlere Taktfrequenz den Bereich eines Optimums zwischen den im vorangehenden geschilderten Parametern nicht verläßt.

Gemäß der vorliegenden Erfindung wird diese Aufgabe durch ein Verfahren zur Regelung der Taktfrequenz bei Umrichtern mit Hysteresestromregler nach folgenden Verfahrensschritten gelöst:

1.1 Fortlaufende Erfassung einer Anzahl von Ansteuerimpulsen für Stromrichterventile des Umrichters pro Netzperiodendauer in mindestens einer Phase,
1.2 Vergleich der ermittelten Anzahl mit einem vorgegebenen Wert, welcher einem Optimum entspricht,
1.3 Erhöhung der Hysterese in allen Phasen bei Überschreitung bis die ermittelte Anzahl ungefähr oder genau dem vorgegebenen Wert entspricht.

In einer ersten vorteilhaften Ausgestaltung des Verfahrens gemäß der vorliegenden Erfindung wird eine besonders geeignete Maßnahme zur Beeinflussung der Hysterese vorgeschlagen. Diese ist durch folgendes weiteres Merkmal gekennzeichnet: 2.1 die Erhöhung der Hysterese erfolgt durch Integration.

In einer weiteren vorteilhaften Ausgestaltung des Verfahrens gemäß der vorliegenden Erfindung wird darüber hinaus eine Möglichkeit geschaffen, Einflüsse der Induktivität der Kommutierungsdrosseln so zu berücksichtigen, daß ein maximaler Hysteresewert nicht überschritten werden kann. Dies wird durch folgende weitere Verfahrensschritte erreicht:

3.1 Vergleich der ermittelten Anzahl mit einem zweiten vorgegebenen Wert,
3.2 bei Überschreitung Sperren der Ansteuerimpulse für die Stromrichterventile des Umrichters in allen Phasen.

Um das Verfahren gemäß der vorliegenden Erfindung auf besonders einfache und effektive Art und Weise durchführen zu können, wird desweiteren eine Schaltungsanordnung vorgeschlagen, welche gleichermaßen zur Lösung der der Erfindung zugrundeliegenden Aufgabe geeignet ist. Diese Schaltungsanordnung zur Regelung der Taktfrequenz bei Umrichtern mit Hysteresestromregler besteht aus folgenden Merkmalen:

4.1 Einer von Ansteuerimpulsen für Stromrichterventile des Umrichters angesteuerten Zählereinheit zur fortlaufende Erfassung einer Anzahl pro Netzperiodendauer in mindestens einer Phase,
4.2 einem Komparator zum Vergleich der ermittelten Anzahl mit einem vorgegebenen Wert, welcher einem Optimum entspricht,
4.3 einem Integrator zur Erhöhung der Hysterese in allen Phasen bei Überschreitung bis die ermittelte Anzahl ungefähr oder genau dem vorgegebenen Wert entspricht.

In einer ersten vorteilhaften Ausgestaltung der Schaltungsanordnung gemäß der vorliegenden Erfindung werden Maßnahmen ergriffen, um die Einflüsse der Induktivität einer Kommutierungsdrossel im Hinblick auf eine Überschreitung eines maximalen Hysteresewertes zu verhindern. Dies wird durch folgende weitere Merkmale erreicht:

5.1 einem zweiten Komparator zum Vergleich der ermittelten Anzahl mit einem zweiten vorgegebenen Wert,
5.2 einem Mittel zum Sperren der Ansteuerimpulse für die Stromrichterventile des Umrichters in allen Phasen bei Überschreitung.

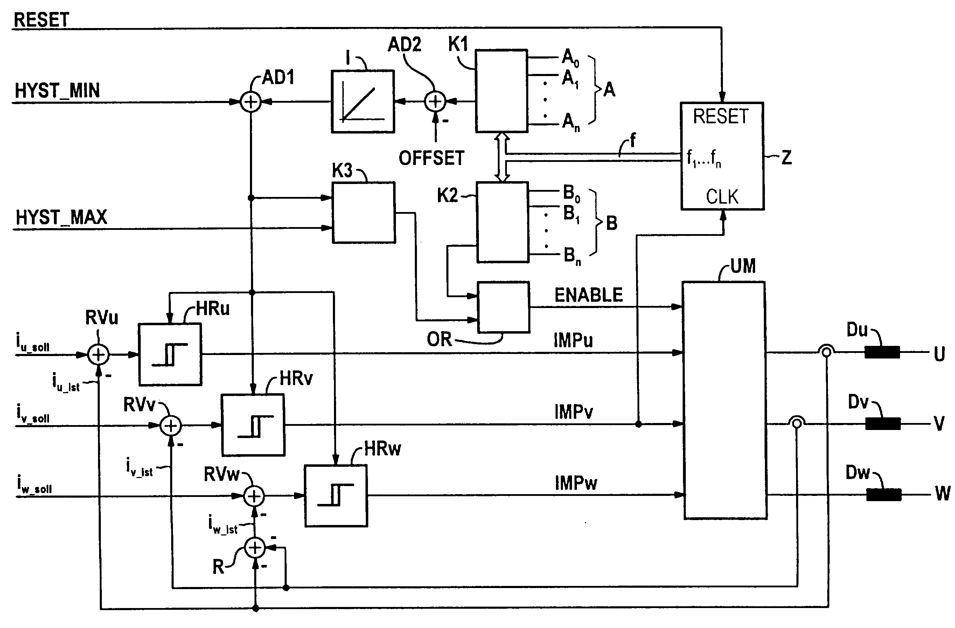

Weitere Vorteile und Einzelheiten der vorliegenden Erfindung ergeben sich anhand der folgenden Schilderung eines vorteilhaften Ausführungsbeispiels und in Verbindung mit der Figur. Es zeigt:

FIG ein Blockschaltbild einer Schaltungsanordnung zur Regelung der Anzahl bei Umrichtern mit Hysteresestromreglern gemäß der vorliegenden Erfindung.

In der Darstellung gemäß der Figur ist ein Blockschaltbild einer Schaltungsanordnung zur Regelung der Taktfrequenz f bei Umrichtern UM mit Hysteresestromregler HRu, HRv, HRw gezeigt. Ein solcher Umrichter kann sowohl die Funktion eines Gleichrichters, als auch die Funktion eines Wechselrichters besitzen. In der Darstellung gemäß der Figur ist ein Umrichter UM gezeigt, welcher an die Phasen U, V, W eines Drehstromsystems über jeweils eine einer Phase zugeordnete Kommutierungsdrossel Du, Dv, Dw angeschlossen ist.

Die in dem Umrichter UM vorhandenen Stromrichterventile (der besseren Übersichtlichkeit halber nicht gezeigt) werden durch jeweils einer Phase zugeordnete Ansteuersignale IMPu, IMPv, IMPw in einer Weise angesteuert, wie sie dem Fachmann geläufig ist und in der Fachliteratur zahlreich beschrieben ist. Die genannten Ansteuerimpulse werden dabei wie folgt generiert.

Das eingangs geschilderte System von gegeneinander äquidistant phasenverschobenen Wechselstromsollwerten $i_{u\_soll}$, $i_{v\_soll}$ und $i_{w\_soll}$ gleicher Amplitude wird für jede Phase U, V, W jeweils einer Regelvergleichsstufe RVu, RVv, RVw zugeleitet, welcher jeweils eingangsseitig ebenfalls das analoge Istwertsystem der Wechselströme $i_{u\_ist}$, $i_{v\_ist}$ und $i_{W\_ist}$ der Netzphasen U, V, W zugeführt wird. Die entsprechenden Wechselstromistwerte werden über Wechselstrommeßglieder erfaßt. Dabei kann man sich die Tatsache zunutze machen, daß sich eine Netzphase aus den beiden anderen Netzphasen entsprechend den folgenden Berechnungsvorschriften rekonstruieren läßt.

Dabei wird die Tatsache ausgenutzt, daß die algebraische Summe der Stromistwerte, die als Nullkomponente bezeichnet wird, gleich Null ist. Dieser Zusammenhang wird durch die folgende Berechnungsvorschrift verdeutlicht:

$$i_{u\_ist} + i_{v\_ist} + i_{w\_ist} = 0.$$

Damit läßt sich der Stromsollwert für die dritte, nicht in dem oder den Funktionsspeichergliedern als Winkelfunktionswerte hinterlegte Phase (im Ausführungsbeispiel ist dies die Phase W) durch ein Rechenglied R nach folgender Berechnungsvorschrift bestimmen:

$$i_{w\_ist} = - (i_{u\_ist} + i_{v\_ist}).$$

Das Rechenglied R kann beispielsweise in Form eines Addierers oder in Form eines entsprechend programmierten Mikroprozessors ausgestaltet sein. Somit steht am Ausgang des Rechengliedes R der letzte benötigte Wechselstromistwert $i_{w\_ist}$ bereit.

Am Ausgang der genannten Regelvergleichsstufen RVu, RVv, RVw steht für jede Phase ein phasenbezogener Differenzwert bereit, welcher als analoges Referenzsignal für jede Phase U, V, W zur Ansteuerung eines für jede Phase getrennt vorgesehenen unterlagerten Hysteresestromreglers HRu, HRv, HRw dient.

Jeder dieser genannten Hysteresestromreglers HRu, HRv, HRw dient zur Erzeugung von jeweiligen Ansteuerimpulsen IMPu, IMPv, IPMw für die an die entsprechende Phase des wechselstromseitigen Anschlusses angeschlossenen Stromrichterventile des Umrichters UM. Somit werden die drei Phasen U, V, W getrennt voneinander geregelt.

Dabei wird ein Toleranzband - die Hysterese - als endlicher Wert fest vorgegeben. Variabel ist in diesem Fall die Taktfrequenz f. Sie nimmt im Bereich der Spannungsnulldurchgänge zu. Genau dies stellt jedoch einen enormen Vorteil dar. Da die Spannungs- und Stromnullduchgänge phasengleich sind (Synchronität), bleiben die Schaltverluste trotz hoher Frequenz in diesem Bereich minimal. Im Falle eines Hysteresestromreglers HRu,HRv,HRw werden die Stromrichterventile (der besseren Übersichtlichkeit halber nicht gezeigt) stets dann umgeschaltet, wenn sich der zugehörige Stromistwert dieser Phase vom zugehörigen Stromsollwert um mehr als die vorgegebene Hysteresebreite unterscheidet. Dadurch entsteht eine Zweipunktregelung des Stromes für jede Phase U,V,W, der sich somit praktisch stets innerhalb eines vorgegebenen Toleranzbandes um den Sollwert bewegt.

Unter der Annahme, daß die mittlere Taktfrequenz f in allen drei Phasen U, V, W gleich ist, wird eine der Phasen zur Messung der Anzahl von Ansteuerimpulsen herangezogen (im Ausführungsbeispiel ist dies z.B. die Phase V). Die Messung erfolgt über einen Zähler Z, dessen Clockeingang CLK direkt durch die Ansteuerimpulse IMPv angesteuert wird. Dieser Zähler Z wird jeweils nach Ablauf einer Netzperiode in der Phase V rückgesetzt. Dies geschieht über einen RESET-Eingang des Zählers Z. Ein RESET-Signal läßt sich beispielsweise aus einem Mittel zur Netzsynchronisation, wie es in der deutschen Patentanmeldung 197 03 659.7 vorgeschlagen ist, herleiten.

Am Ausgang des Zählers Z erhält man so die Anzahl n der Schaltvorgänge pro Periodendauer. Mit diesem Wert wird ein erster Komparator K1 beaufschlagt, dem an dessen anderem Eingang ein vorgegebener Wert A zugeführt wird, wobei der Wert A dem Optimimum der mittleren Taktfrequenz f entspricht. Über den Komparator K1 läßt sich nun ermitteln, ob der Ausgangswert des Zählers Z den Wert A überschreitet. Ist dies der Fall, so wird vom Zeitpunkt der Überschreitung bis zum nächsten RESET-Impuls ein Integrator I gestartet, welcher mit dem Ausgang des Komparators verbunden ist.

Der Komparator K1 führt somit bei Überschreitung ein Ausgangssignal von 1, welches im Integrator I aufintegriert wird. Der Wert am Ausgang des Integrators I führt zu einer Erhöhung der Hysterese in den Hysteresestromreglern HRu, HRv, HRw, indem der Ausgangswert des Integrators einem unteren Startwert für die Hysterese HYST_MIN in einem Addierer AD1 hinzuaddiert wird. Der Ausgangswert des Addierers AD1 steuert direkt die Hysterese der genannten Hysteresestromregler. Die so bewirkte Erhöhung der Hysterese bei Überschreitung des optimalen Wertes A hat eine Verringerung der Taktfrequenz f zur Folge. Dies geschieht über mehreren Netzperioden bis am Ausgang des Komparators K1 die Pulsbreite auf ein Minimum reduziert ist. In diesem eingeschwungenen Zustand ist dann also die Anzahl der Pulse pro Periodendauer (Ausgangssignal des Zählers Z) gleich der über den Wert A vorgegebenen.

Um temporäre Einflüsse bei dem vorgestellten Regelungsverfahren gemäß der vorliegenden Erfindung ausgleichen zu können, kann bedarfsweise zwischen den Ausgang des Komparators K1 und den Eingang des Integrators I ein zweiter Addierer AD2 geschaltet werden, über welchen ein OFFSET-Wert berücksichtigt werden kann, welcher beispielsweise zum Ausgleich vorhandener Offsetwerte dient. Solche vorhandenen Offsetwerte können z.B. im Integrator I dazu führen, daß dieser an den positiven Anschlag driftet. Der Integrator muß also tendenziell zum negativen anschlag driften, wasbeispielsweise beim Ausbleiben von Impulsen über viele Meßperioden geschieht.

Häufig besteht die Gefahr, daß Kommutierungsdrosseln Du, Dv, Dw mit zu kleiner Induktivität verwendet werden, was zur Folge haben könnte, daß sich die Hysterese über mehrere Netzperioden auf einen maximalen Hysteresewert erhöht. Bei Überschreiten eines solchen maximalen Hysteresewertes können zum Schutz des Leistungsteiles und eventuell auch der Kommutierungsdrosseln die Ansteuerimpulse IMPu, IMPv, IMPw gesperrt werden.

Auch für den Fall, daß die Kommutierungsdrossel ganz weggelassen wird, (d.h. die Induktivität zu Null wird), würde die Taktfrequenz nur noch durch die Netzimpedanz bestimmt werden. In diesem Fall muß sowohl zum Schutz des Leistungsteiles als auch zum Schutz der sonst am Netz betriebenen Geräte möglichst innerhalb einer Netzperiodendauer reagiert werden. Zu diesem Zweck ist ein weiterer Komparator K2 vorgesehen, welcher ebenfalls durch das Ausgangssignal des Zählers Z, welches der Anzahl n der Ansteuerimpulse und damit der mittleren Taktfrequenz f entspricht, beaufschlagt ist. An dem anderen Eingang des Komparators K2 steht ein ebenfalls fest vorgegebener Wert B, welcher der maximal zulässigen mittleren Taktfrequenz entspricht. Zusätzlich läßt sich bedarfsweise noch ein weiterer Komparator K3 vorsehen, welcher zum einen mit einem Maximalwert für die Hysterese HYST_MAX, zum anderen mit dem Ausgangswert des Addierers AD1 beaufschlagt wird. Bei Überschreiten des maximalen Hysteresewertes führt der Komparator K3 an seinem Ausgang ein Signal zum Sperren der Stromrichterimpulse im Umrichter UM. Die beiden Sperrsignale, welche zum einen am Komparator K2, zum anderen am Komparator K3 anstehen, lassen sich über ein logisches ODER-Gatter OR verschalten, so daß der Ausgangs des ODER-Gatters OR dem Sperrsignal ENABLE darstellt, welches zum umrichter UM geführt ist. Auf diese Weise führt eine Überschreitung des vorgegebenen Wertes B durch die Anzahl der gezählten Impulse einerseits oder aber eine Überschreitung des maximal zulässigen Hysteresewertes HYST_MAX andererseits zu einem sofortigen Sperren der Ansteuerimpulse IMPu, IMPv, IMPw.

**Patentansprüche**

1. Verfahren zur Regelung der Taktfrequenz (f) bei Umrichtern (UM) mit Hysteresestromregler (HRu,HRv,HRw) nach folgenden Verfahrensschritten:

    1.1 Fortlaufende Erfassung einer Anzahl (n) von Ansteuerimpulsen (IMPu,IMPv,IMPw) für Stromrichterventile des Umrichters (UM) pro Netzperiodendauer in mindestens einer Phase (U,V,W),
    1.2 Vergleich der ermittelten Anzahl (n) mit einem vorgegebenen Wert (A), welcher einem Optimum entspricht,
    1.3 Erhöhung der Hysterese in allen Phasen bei Überschreitung (n>A) bis die ermittelte Anzahl (n) ungefähr oder genau dem vorgegebenen Wert (A) entspricht.

2. Verfahren nach Anspruch 1 mit folgendem weiteren Merkmal:

    2.1 die Erhöhung der Hysterese erfolgt durch Integration.

3. Verfahren nach Anspruch 1 oder 2 nach folgenden weiteren Verfahrensschritten:

    3.1 Vergleich der ermittelten Anzahl (n) mit einem zweiten vorgegebenen Wert (B),
    3.2 bei Überschreitung (n>B) Sperren der Ansteuerimpulse (IMPu,IMPv,IMPw) für die Stromrichterventile des Umrichters (UM) in allen Phasen (U,V,W).

4. Schaltungsanordnung zur Regelung der Taktfrequenz (f) bei Umrichtern (UM) mit Hysteresestromregler (HRu,HRv,HRw) mit folgenden Merkmalen:

    4.1 Einer von Ansteuerimpulsen (IMPu,IMPv,IMPw) für Stromrichterventile des Umrichters (UM) angesteuerten Zählereinheit (Z) zur fortlaufende Erfassung einer Anzahl (n) pro Netzperiodendauer in mindestens einer Phase (U,V,W),
    4.2 einem Komparator (K1) zum Vergleich der ermittelten Anzahl (n) mit einem vorgegebenen Wert (A), welcher einem Optimum entspricht,
    4.3 einem Integrator (I) zur Erhöhung der Hysterese in allen Phasen bei Überschreitung (nA) bis die ermittelte Anzahl (n) ungefähr oder genau dem vorgegebenen Wert (A) entspricht.

5. Schaltungsanordnung nach Anspruch 4 mit folgenden weiteren Merkmalen:

    5.1 einem zweiten Komparator (K2) zum Vergleich der ermittelten Anzahl (n) mit einem zweiten vorgegebenen Wert (B),
    5.2 einem Mittel zum Sperren der Ansteuerimpulse (IMPu,IMPv, IMPw) für die Stromrichterventile des Umrichters (UM) in allen Phasen (U,V,W) bei Überschreitung (n>B).